(19) Europäisches Patentamt
European Patent Office
Office européen des brevets

(11) **EP 2 057 883 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**22.02.2017 Patentblatt 2017/08**

(45) Hinweis auf die Patenterteilung:
**16.10.2013 Patentblatt 2013/42**

(21) Anmeldenummer: **08162520.4**

(22) Anmeldetag: **18.08.2008**

(51) Int Cl.:
**A01D 43/08** (2006.01)

(54) **Landwirtschaftliche Arbeitsmaschine**

Agricultural work machine

Machine de travail agricole

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **09.11.2007 DE 102007053910**

(43) Veröffentlichungstag der Anmeldung:
**13.05.2009 Patentblatt 2009/20**

(73) Patentinhaber: **CLAAS Selbstfahrende Erntemaschinen GmbH 33428 Harsewinkel (DE)**

(72) Erfinder:
• **Diekhans, Norbert, Dr.**
  **33335 Gütersloh (DE)**
• **Kriebel, Bastian**
  **48167 Münster (DE)**
• **Claussen, Frank**
  **33428 Harsewinkel (DE)**

(56) Entgegenhaltungen:
EP-A- 0 843 959        EP-A- 0 908 086
EP-A- 0 908 087        EP-A- 0 931 446
EP-A2- 1 072 885       US-A- 5 092 819
US-A- 5 106 339        US-A- 5 616 851
US-A1- 2003 115 938    US-B1- 6 421 990

**Beschreibung**

Die Erfindung betrifft eine Messeinrichtung zur Messung von Inhaltsstoffen eines Erntegutes nach dem Oberbegriff des Anspruchs 1.

Aus der EP 0 843 959 ist eine als Feldhäcksler ausgeführte landwirtschaftliche Arbeitsmaschine bekannt geworden, die in ihrem Auswurfkrümmer eine Messvorrichtung zur Detektion von Parametern eines den Feldhäcksler durchlaufenden Erntegutstromes aufnimmt. Die Messvorrichtung detektiert die Ernteguteigenschaften mittels eines Mikrowellensensors, wobei spezielle Auswertalgorithmen vorgesehen sind, die unter Umständen auftretende Störgrößen eliminieren oder zumindest deren Einfluss auf die zu detektierten Ernteguiparameter reduzieren. Wegen des enormen Informationsgehaltes der gutstrombedingten Änderung des elektrischen Feldes der Mikrowellen kann mittels einer geeigneten Analysesoftware unter anderem der Feuchtegehalt des die landwirtschaftliche Arbeitsmaschine durchlaufenden Erntegutes detektiert werden. In einer Ausgestaltungsvariante wird unter dem Gesichtspunkt der Reduzierung möglicher Fehlerquellen zudem vorgeschlagen, bei der Analyse der Mikrowellensignale auch Temperaturwerte des Erntegutes, die mittels separater Temperatursensoren erfasst werden, zu berücksichtigen. Obgleich derartige Systeme unter Hinzuziehung geeigneter Analysesoftware in der Lage sind, eine Vielzahl von Erntegutparametern zu ermitteln, haftet Mikrowellensensoren insbesondere der Nachteil an, dass ihre Integration in landwirtschaftliche Arbeitsmaschinen sehr kostenintensiv ist und deshalb nicht für einen breiten landwirtschaftlichen Einsatz, wie etwa in gezogenen landwirtschaftlichen Arbeitsmaschinen geeignet ist. Dies hängt insbesondere damit zusammen, dass eine Vielzahl technologischer Voraussetzungen geschaffen werden müssen, damit die Mikrowellensignale störungsarm einen Erntegutstrom detektieren können und maschinen- oder erntegutbedingte Störungen weitgehend kompensiert werden.

Aus diesem Grund wird unter anderem in der EP 0 931 446 ein Sensorsystem offenbart, welches mittels zweier Elektroden den Leitwert eines den Sensor passierenden Erntegutstromes ermittelt und schließlich aus dem ermittelten Leitwert einen Wert für die Gutfeuchte ableitet. Der Leitwertsensor selbst setzt sich aus einer stegförmigen und einer kreisförmigen Elektrode zusammen und kann an einer beliebigen Stelle des von dem Erntegut durchlaufenen Auswurfkrümmers eines selbstfahrenden Feldhäckslers angeordnet sein. Die Position des Leitwertsensor in der landwirtschaftlichen Arbeitsmaschine wird dabei so gewählt, dass die Sensoreinrichtung zuverlässige Messergebnisse liefert und zudem möglichst gut vor Verschleiß geschützt ist. Eine solche Anordnung hat Insbesondere den Vorteil, dass mit einem niedrigen technischen Aufwand und damit geringen Kosten eine Sensiereinrichtung für Parameter eines eine landwirtschaftliche Arbeitsmaschine durchlaufenden Gutstromes geschaffen wird. Ein wesentlicher Nachteil solcher Ausführungen Ist jedoch, dass eine optimale Position einer solchen Messeinrichtung maßgeblich von dem Bewegungsverhalten des Erntegutes in der landwirtschaftlichen Arbeitsmaschine bestimmt wird und sich je nach Gutart, kinematischen Parametern der verschiedenen Arbeitsorgane und dem Feuchtegehalt des Erntegutes erheblich ändern kann. Dies bedeutet, dass eine universell geltende optimale Position der Gutdetektionseinrichtung eher nicht angenommen werden kann, sodass die mit einer derartigen Einrichtung detektierten Erntegutparameter nicht in jedem Einsatzfall zuverlässige Messergebnisse liefern. Aufgrund dessen, dass die Gutfeuchte einen wesentlichen Einfluss auf die Ermittlung eines eine landwirtschaftliche Maschine durchlaufenden Erntegutdurchsatzes hat, Ist es von großer Bedeutung, dass die messtechnische Erfassung der Erntegutfeuchte im Arbeitsbetrieb der landwirtschaftlichen Maschine präzise Werte liefert.

Aus der EP 0 908 086 und der US 5 092 819 sind ferner Feuchtemesseinrichtungen bekannt geworden, die ebenfalls temperaturkompensiert die Erntegutfeuchte ermitteln.

Es ist deshalb Aufgabe der Erfindung die beschriebenen Nachteile des Standes der Technik zu vermeiden und insbesondere eine Messeinrichtung zur Inhaltsstoffbestimmung eines Erntegutes vorzuschlagen, die auch bei schwankenden Messbedingungen zuverlässige Messergebnisse liefert.

Diese Aufgabe wird erfindungsgemäß durch die kennzeichnenden Merkmale des Anspruchs 1 gelöst.

Die Messeinrichtung zur Messung von inhaltsstoffen eines Erntegutes in einer landwirtschaftlichen Maschine umfasst zumindest einen Leitwertsensor, der den inhaltsstoff Gutfeuchte basierend auf einer temperaturkompensierten Detektion des Leitwertes ermittelt. Erfindungsgemäß ist die landwirtschaftliche Arbeitsmaschine als Feldhäcksler ausgeführt. Der Leitwertsensor wird an einem den Erntegutstrom abfördernden Auswurfkrümmer Innenseitig und im Bereich des Auftreffens des von dem Nachbeschleuniger beschleunigten Erntegutstromes positioniert. Dies hat insbesondere den Vorteil, dass stets ein intensiver Kontakt zwischen Erntegutstrom und Leitwertsensor gewährleistet wird. Dadurch wird sichergestellt, dass die Messeinrichtung zur Inhaltsstoffbestimmung eines Erntegutes auch bei schwankenden Messbedingungen zuverlässige Messergebnisse liefert.

In einer vorteilhaften Ausgestaltung der Erfindung wird zur Temperaturkompensation ein Temperatursensor vorgesehen, der zudem in den Leitwertsensor integriert sein kann. Dies hat einerseits den Vorteil, dass eine vielfach bewährte Technologie zur Temperaturmessung herangezogen wird und andererseits ein integrierter Leitwert-Temperatursensor geschaffen wird, der bauraumsparend in die jeweilige landwirtschaftliche Maschine einbaubar ist.

Eine weitere Verbesserung der Genauigkeit der mittels des Leitwertsensors zu ermittelnden Gutfeuchte wird dann erreicht, wenn bei der Ermittlung des Inhaltsstoffes Gutfeuchte zumindest ein weiterer erntegutspezifischer und/oder maschinenspezifischer Parameters berücksichtigt wird.

In einer vorteilhaften Weiterbildung der Erfindung wird der zumindest eine weitere erntegutspezifische und/oder maschinenspezifische Parameter vom Erntegutdurchsatz und/oder der Schichthöhe des von dem Leitwertsensor detektierten Erntegutstromes und/oder der Erntegutart und/oder der Dichte des Erntegutes im Bereich des Leitwertsensors und/oder vom Anpressdruck des Erntegutes im Bereich des Leitwertsensors gebildet. Diese Parameter sind deshalb von großer Bedeutung, da Untersuchungen ergeben haben, dass der von dem beschriebenen Leitwertsensor generierte Leitwert LW maßgeblich von dem momentan an dem Leitwertsensor vorbeibewegten Erntegutdurchsatz, seiner Schichthöhe und der Gutdichte beeinflusst wird, da gerade diese Parameter maßgeblich die Leitfähigkeit des zu detektierenden Erntegutstromes definieren. Da auch die Zellstruktur der den Erntegutstrom bildenden Pflanzen dessen Leitfähigkeit beeinflusst und diese Zellstruktur von Pflanzenart zu Pflanzenart stark schwankt, ist es von Vorteil auch die Erntegutart bei der Leitwertermittlung zu berücksichtigen. Aufgrund dessen, dass ein Leitwertsensor den Leitwert durch mehr oder weniger intensiven Kontakt seiner Elektroden mit dem zu detektierenden Erntegutstrom generiert, ist es auch von erheblicher Bedeutung, wie intensiv der Kontakt zwischen dem Erntegutstrom und den Elektroden ist, wobei die detektierte Leitfähigkeit eines Stoffes mit abnehmendem Kontakt zu einem Leitwertsensor sinkt. Deshalb ist es auch von Vorteil, den Anpressdruck, den der Erntegutstrom auf die Elektroden ausübt zu berücksichtigen, da der Anpressdruck letztlich Synonym für die Intensität des Kontaktes zwischen zu detektierendem Erntegutstrom und dem Leitwertsensor ist.

In einer weiteren vorteilhaften Ausgestaltung der Erfindung ist die landwirtschaftliche Arbeitsmaschine als Feldhäcksler ausgeführt und wobei der erntegutspezifische Parameter Anpressdruck des Erntegutes aus der Wurfgeschwindigkeit des Erntegutes im Bereich des Leitwertsensors, der Weite des Durchgangsspaltes eines dem Leitwertsensor vorgeordneten Nachbeschleunigers und/oder dem Auftreffpunkt des Erntegutstromes im Bereich des Leitwertsensors bestimmt wird, da gerade diese Parameter die Intensität mit der der Erntegutstrom gegen den Leitwertsensor gepresst wird beschreiben.

Gemäss der Erfindung umfasst der zumindest eine Leitwertsensor drei Elektroden und wobei die Elektroden in einer Dreieckanordnung zueinander positioniert sind, sodass durch Beaufschlagen einer einzigen Elektrode mit einem elektrischen Strom an den verbleibenden zwei Elektroden jeweils ein Leitwert ermittelt werden kann, sodass durch Vergleich der Leitwerte der geeignetere Leitwert zur Bestimmung der Gutfeuchte heranziehbar ist.

Indem die Dreieckanordnung der Elektroden des Leitwertsensors in oder entgegen der Gutflussrichtung weisend ausgerichtet ist, wird zudem sichergestellt, dass der Leitwertsensor in zwei verschiedenen Montagepositionen betreibbar ist, sodass bei einer üblicherweise einseitigen verschleißbedingter Abnutzung zunächst der Leitwertsensor gedreht und die zuvor stromab gerichtete Seite des Leitwertsensor nun stromauf in den Erntegutstrom hineinragt. Damit erhöht sich die Standzeit des Leitwertsensors, was letztlich den Wartungsaufwand und analog die Wartungskosten senkt.

Eine kompakte, bauraumsparende und letztlich kostengünstigere Ausführung der erfindungsgemäßen Messeinrichtung ergibt sich auch dadurch, dass der Temperatursensor zumindest einer der Elektroden des Leitwertsensors zugeordnet ist.

Damit über die drei dem Leitwertsensor zugeordneten Elektroden zwei Leitwerte ermittelbar sind und der geeigneter Leitwert auswählbar wird, sind die Elektroden des Leitwertsensors so miteinander gekoppelt, dass stets zwischen zwei Elektroden eine Leitwertbrücke gebildet werden kann und mittels einer Steuer- und Auswerteinheit ein Vergleich der detektierten Leitwerte und die Auswahl des geeigneteren Leitwertes möglich wird.

Eine baulich einfachere Struktur, die nur einen einzigen Leitwert ermittelt, ergibt sich in einer vorteilhaften Ausgestaltung der Erfindung dann, wenn zumindest zwei Elektroden des Leitwertsensors kurzgeschlossen sind, so dass sich zwischen den Elektroden nur eine Leitwertmessbrücke ergibt und der ermittelte Leitwert LW an eine Auswerteinheit (29, 38) übergeben wird.

Zur Kompensation des durch Elektrodenverschleiß auftretenden Messfehlers kann in einer weiteren vorteilhaften Ausgestaltung der Erfindung vorgesehen sein, dass die Elektroden des Leitwertsensors in ihrer vertikalen Positionierung in dem Leitwertsensor einstellbar sind.

Eine konstruktiv besonders einfache Umsetzung des Betreibens des Leitwertsensors in zwei entgegengesetzten Einbaulagen wird schließlich erreicht, dass die Elektroden des Leitwertsensors in eine Grundplatte integriert sind und die Grundplatte in zwei um 180° versetzte Positionen in die landwirtschaftliche Maschine integrierbar ist.

Dem Verschleiß der Elektroden kann in einer weitern vorteilhaften Ausgestaltung der Erfindung auch dadurch entgegengewirkt werden, dass die Elektroden des Leitwertsensors von Einfassungen aus verschleißhartem Material ummantelt sind und die Einfassungen In Gutflussrichtung stromlinienförmig ausgebildet sind.

In einer weiteren vorteilhaften Ausgestaltung der Erfindung wird eine extrem kompakte Struktur des Leitwertsensors dann erreicht, wenn der Leitwertsensor ein als Abdeckhaube ausgeführtes Gehäuse umfasst und die Signalverarbeitungseinrichtung des Leitwertsensors sowie die der landwirtschaftlichen Maschine zugeordnete Auswerteinheit (38) unmittelbar in das als Abdeckhaube ausgeführte Gehäuse integriert sind, sodass der Leitwertsensor selbst bereits die Gutfeuchte und nicht nur den Leitwert ermittelt.

In einer weiteren vorteilhaften Ausgestaltung der Erfindung wird der ermittelte inhaltsstoff von der Gutfeuchte oder ihrem Äquivalent, dem Trockenmassegehalt, gebildet und wobei die ermittelte Gutfeuchte und/oder der Trockenmassegehalt in einer Anzeigeeinheit visualisiert und zudem wiederabrufbar in der Auswerteinheit hinterlegt werden. Dies hat insbesondere den Vorteil, dass einerseits dem Betrelber der landwirtschaftlichen Maschine unmittelbar der generierte Inhaltsstoff angezeigt wird und andererseits steht der ermittelte Wert auch weitern Steuer- und Regelabläufen in der landwirtschaftlichen Maschine, wie etwa zur Erntegutdurchsatzermittlung, zur Verfügung.

Weitere vorteilhafte Ausgestaltungen sind Gegenstand weiterer Unteransprüche und werden nachfolgend an Hand in mehreren Figuren dargestellter Ausführungsbelspiele beschrieben. Es zeigen:

Figur 1　　eine als Feldhäcksler ausgeführte landwirtschaftliche Maschine mit erfindungsgemäßer Messeinrichtung

Figur 2　　eine Detaildarstellung der erfindungsgemäßen Messeinrichtung

Figur 3　　eine schematische Darstellung der erfindungsgemäßen Generierung der Gutfeuchte

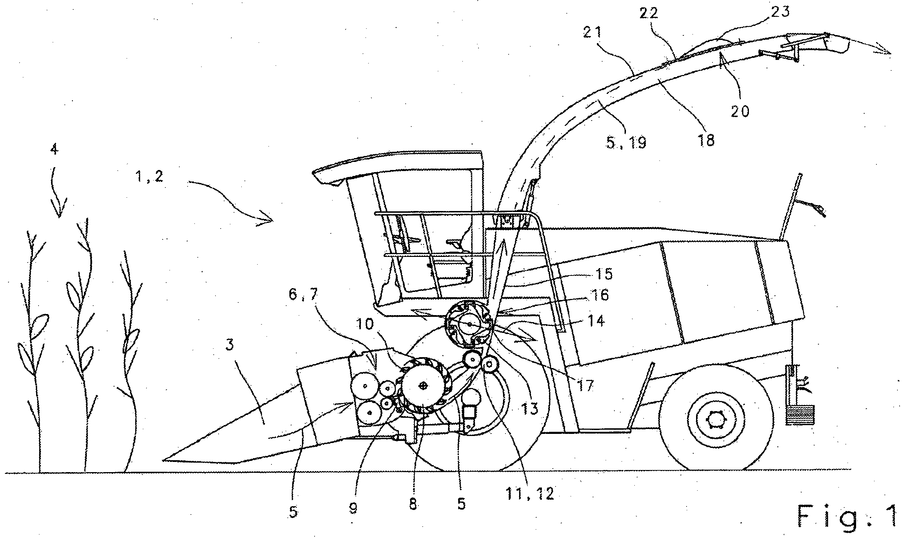

Fig. 1 zeigt eine als Feldhäcksler 2 ausgeführte landwirtschaftliche Maschine 1. Üblicher Weise nimmt ein Feldhäcksler 2 frontseitig ein Vorsatzgerät 3 zum Ernten und Aufnehmen eines stehenden oder bereits in Schwaden abgelegten Erntegutes 4 auf. Im rückwärtigen Bereich des Vorsatzgerätes 3 gelangt der Erntegutstrom 5 schließlich in eine aus Einzugs- und Vorpresswalzen 6 bestehende Vorverdichtungseinrichtung 7, die den Erntegutstrom 5 schließlich an das ihr nachgeordnete Häckselorgan 8 übergibt Zwischen einer Gegenschneide 9 und den umlaufenden Häckselmessern 10 wird der Erntegutstrom 6 zerkleinert und im rückwärtigen Bereich der Häckseltrommel 8, je nach Emtegutart, an eine Nachzerkleinerungseinrichtung 11, einen sogenannten Korncracker 12, übergeben. Aufgrund verschiedener Reibeffekte und bedingt durch die Nachzerkleinerung nimmt die kinetische Energie des Erntegutstroms 5 allmählich ab, was in der Regel durch die Anordnung eines Nachbeschleunigers 13 im rückwärtigen Bereich der Korncracker 12 ausgeglichen wird. Im dargestellten Ausführungsbeispiel kann die Position des Nachbeschleunigers 13 gemäß Pfeilrichtung 14 innerhalb des ihn umgebenden Auswurfschachtes 16 verändert werden. Diese Positionsänderung führt zu einer Änderung der Weite des sich zwischen Nachbeschleuniger 13 und der Wandung 16 des Auswurfschachtes 15 ergebenden Durchgangsspaltes 17. Je geringer die Weite des Durchgangsspaltes 17 Ist, um so intensiver wird der den Durchgangsspalt 17 passierende Erntegutstrom 5 beschleunigt, sodass die in dem Auswurfkrümmer 18 von dem Erntegutstrom 5 durchlaufene Bewegungsbahn 19 maßgeblich von dem Beschleunigungseffekt des Nachbeschleunigers 13 abhängt. Im Auftreffbereich 20 des aus dem Nachbeschleuniger 13 austretenden Gutstromes 5 auf der Wandung 21 des Auswurfkrümmers 18 wird die Wandung 21 durch ein auswechselbares Verschleißblech 22 gebildet, welchem die im folgenden näher beschriebene erfindungsgemäße Messeinrichtung 23 zur Bestimmung von Inhaltsstoffen des die landwirtschaftliche Maschine 1 durchlaufenden Erntegutstromes 5 zugeordnet ist.

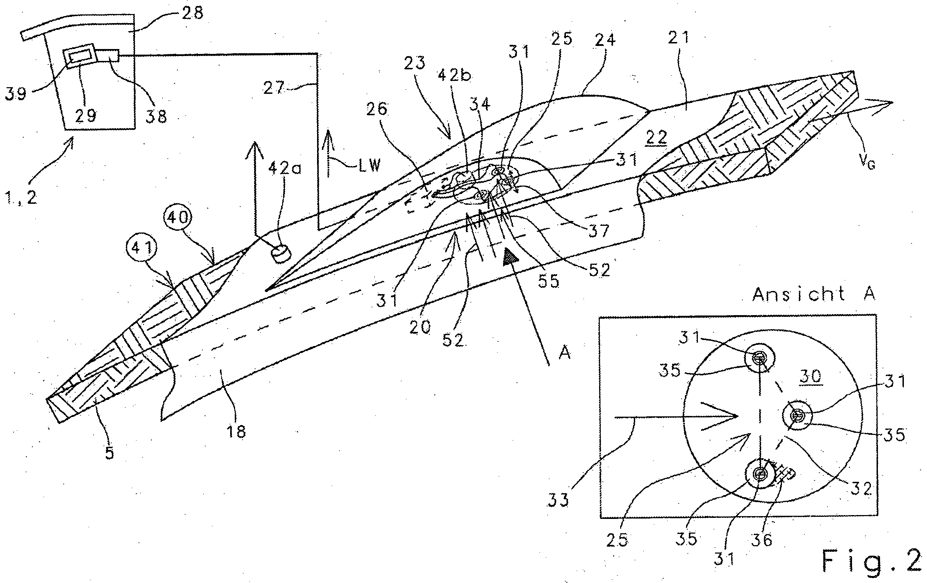

Fig. 2 zeigt einen Ausschnitt des Auswurfkrümmers 18 mit der erfindungsgemäßen Messeinrichtung 23. Die Messeinrichtung 23 umfasst eine dem Verschleißblech 22 des Auswurfkrümmers 18 oben- und außenseitig zugeordnete Abdeckhaube 24 zum Schutz des erfindungsgemäßen Leitwertsensors 25 und der im zugeordneten Signalverarbeitungseinrichtung 26 vor schädigenden Umwelteinflüssen, wie Feuchtigkeit, Schmutz und Kollisionen mit Hindernissen. Zugleich wird durch die Abdeckhaube 24 die Signal- und Datenübertragungsleitung 27 geführt, die letztlich mit einer in der Fahrzeugkabine 28 angeordneten Auswert- und Anzeigeeinheit 29 in Wirkverbindung steht. Die Positionierung der Messeinrichtung 23 an dem Verschleißblech 22 ist so gewählt, dass sie sich unmittelbar in dem Auftreffbereich 20 des Erntegutstromes 5 an der obenseitigen Wandung 21 des Auswurfkrümmers 18 befindet. Gemäß der In Fig. 2 eingetragenen Blickrichtung A ist der erfindungsgemäße und noch näher zu beschreibende Leitwertsensor 25 innenseitig in das Verschleißblech 22 eingelassen. Im dargestellten Ausführungsbeispiel umfasst der Leitwertsensor 25 eine Grundplatte 30, die von drei Elektroden 31 durchsetzt wird. Die Elektroden 31 sind zueinander in einer dreleckförmigen Position 32 angeordnet, wobei eine der Elektroden 31 den weiteren Elektroden 31 in Förderrichtung 33 des Erntegutes 5 vorgeordnet in die Grundplatte 30 des Leitwertsensors 25 eingelassen ist. In der Signalverarbeitungseinrichtung 26 sind die drei Elektroden 31 so miteinander durch Leitungen 34 verbunden, dass stets durch Anlegen eines Stromes an einer beliebigen Elektrode 31 der sich ergebende Leitwert zwischen dieser Elektrode und den weiteren Elektroden 31 ermittelt werden kann, sodass während einer Leitwertmessung stets zwei Leitwerte ermittelbar sind. In einer vereinfachten Ausführungsvariante können auch zwei der drei Elektroden 31, vorzugsweise die quer zum Gutfluss 33 auf einer Linie liegenden Elektroden 31, miteinander kurzgeschlossen sein, sodass der Leitwertsensor 25 stets nur einen Leitwert LW ermitteln kann. Da eine zuverlässige Leitwertermittlung in einem Erntegutstrom 5 einen möglichst geringen Abstand zwischen Leitwertsensor 25 und Erntegutstrom 5 voraussetzt, dies aber zu einem hohen Verschleiß an dem Leitwertsensor 25 führen kann, werden die den Erntegutstrom 5 kontaktierenden Elektroden 31 von Einfassungen 35 aus einem verschleißfesten Material, vorzugsweise aus Hartmetall, ummantelt. Um den Einfluss des Materialverschleißes möglichst gering zu halten ist es auch denkbar, dass die Elektroden 31 von stromlinienförmig gestalteten Einfassungen 36 ummantelt werden, die in Gutflussrichtung 33 weisen und aus verschleißfestem Material bestehen, sodass sich eine höhere Standzeit der Elektroden 31 ergibt. Zudem kann der Leitwertsensor 25 wegen der dreieckförmigen Position 32 der Elektroden 31 zueinander auch um 180° gedreht innenseitig in das Verschleißblech 22 eingelassen werden, sodass die Standzeit des Leitwertsensors 25 durch beidseitigen gleichmäßigen Verschleiß ebenfalls erhöht werden kann. Für den letztgenannten Fall muss die Grundplatte 30 um 180° gedreht in die Innenseite des Verschteißblechs 22 eingeschraubt werden, wobei dann die eine Elektrode 31 den weiteren Elektroden 31 in Gutflussrichtung 33 nachgeordnet positioniert ist. Denkbar ist auch, dass die Elektroden 31 im einfachsten Fall mittels Schraubverbindungen in ihrer axialen Lage gemäße Pfeilrichtung 37 verschiebbar in die Grundplatte 30 eingelassen sind, sodass im Verschleißfall die jeweilige Elektrode 31 In Richtung des an ihr vorbeigeförderten Erntegutstromes 5 nachgeführt werden kann.

Es liegt im Rahmen der Erfindung, dass die erfindungsgemäße Messeinrichtung 23 an einer beliebigen Stelle in einer landwirtschaftlichen Maschine 1 in unmittelbarer Nähe eines die landwirtschaftliche Maschine 1 durchlaufenden, noch zu durchlaufenden oder bereits durchgelaufenen Erntegutstromes 5 angeordnet ist, sodass die Erfindung nicht auf die Anbringung der Messeinrichtung 23 an einem Verschleißblech 22 eines Feldhäckslers 2 beschränkt ist. Weiter liegt es im Rahmen der Erfindung, dass die im dargestellten Ausführungsbeispiel in der Fahrzeugkabine 28 des Feldhäcksler 2 angeordnete kompakte Auswert- und Anzeigeeinheit 29 an einer beliebigen Stelle einer landwirtschaftlichen Maschine 1 angeordnet und gegebenenfalls als voneinander getrennte Auswerteinheit 38 und Anzeigeeinheit 39 gestaltet sein kann.

Damit nun erfindungsgemäß die Gutfeuchte 40 des Erntegutstromes 5 unter Berücksichtigung der Temperatur 41 des Erntegutstromes 5 und/oder der ihn umhüllenden Umgebung temperaturkompensiert ermittelt werden kann, ist der im Auftreffbereich 20 liegenden Wandung 21 oder dem Verschleißblech 22 des Auswurfkrümmers 18 zudem ein an sich bekannter Temperatursensor 42a zugeordnet. Aus Vereinfachungsgründen kann der Temperatursensor gemäß Bezugszeichen 42b auch unmittelbar in den Leitwertsensor 25 oder in eine seiner Elektroden 31, vorzugsweise jeweils in die mittlere Elektrode 31 integriert sein. In letztgenanntem Fall kann die ermittelte Temperatur 41 unmittelbar über die Signal- und Datenübertragungseinrichtung 27 der erfindungsgemäßen Messeinrichtung 23 an die Auswerteinheit 29, 38 übergeben werden. Im anderen Fall wäre eine separate, nicht dargestellte, Datenübertragungsleitung vorzusehen.

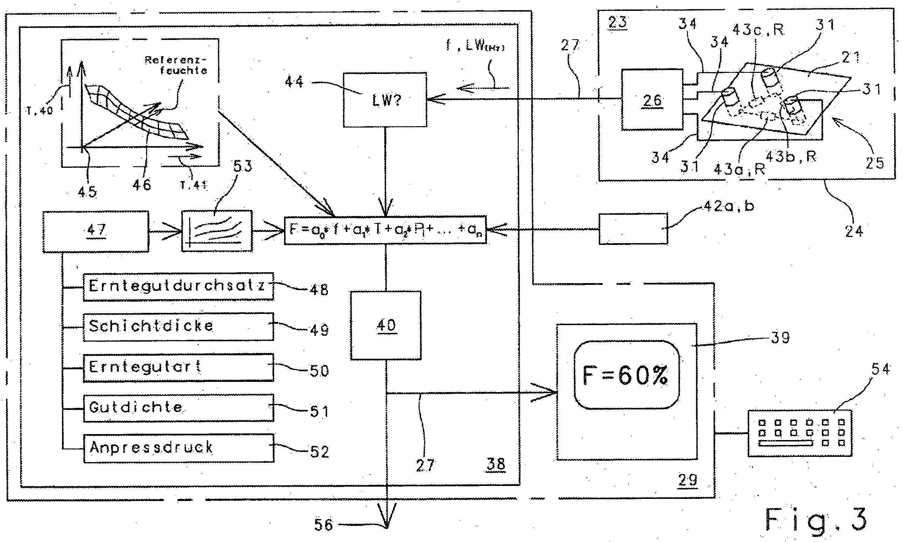

Fig. 3 zeigt nun Details der erfindungsgemäßen Messeinrichtung 23 zur Beschreibung der wesentlichen Aspekte der Erfindung. Wie bereits erwähnt sind jeweils benachbarte Elektroden 31 mittels elektrischer Leitungen 34 mit der Signalverarbeitungseinrichtung 26 verdrahtet, sodass der Leitwertsensor 26 insgesamt drei sogenannte Leitwertbrücken 43 umfasst, die In Fig. 3 schematisch als elektrische Widerstände R des Erntegutstromes 5 dargestellt sind. Wären zwei der Elektroden, wie zuvor beschrieben, kurzgeschlossen, ergäbe sich nur eine Leltwertbrücke 43.

In an sich bekannter Weise generiert ein Leitwertsensor 25 aus dem zwischen den jeweiligen Elektroden 31 und dem Erntegutstrom 5 fließenden elektrischen Strom einen Ohmschen Widerstand, der schließlich in der dem Leltwertsensor 26 unmittelbar zugeordneten Signalverarbeitungseinrichtung 26 in eine Frequenz f in Hz umgerechnet wird, die dann dem ermittelten Leitwert LW entspricht. Der oder die ermittelten Leitwerte LW werden dann an die Auswerteinheit 38 übergeben, in der eine erste Prüfroutine 44 in Abhängigkeit von noch näher zu beschreibenden Erntegut-, Maschinen- und Sensorparametern einen Plausibilitätscheck durchführt, welche der ermittelten Leitwerte LW berücksichtigt werden und damit welche Leitwertmessbrücke 43a-c in dem weiteren Messverfahren die Daten zur Leitwertermittlung generleren soll. Sofern wegen des Kurzschlusses zweier Elektroden 31 nur eine Leitwertbrücke 43 existiert, wird unmittelbar deren Leitwert LW dem weiteren Datengenerierungsprozess zugrunde gelegt.

In einem nächsten Schritt wird der ausgewählte Leitwert LW mit der von dem Temperatursensor 42a, b generierten Temperatur 41 des Erntegutstromes 5 und/oder seiner Umgebung zu einer temperaturkompensierten Gutfeuchte 40 verrechnet. Dabei gehorcht die ermittelte Gutfeuchte 40 der Beziehung,

$$F = a_0 \cdot f + a_1 \cdot T + a_2 \cdot P_i + \ldots + a_n$$

wobei F der erfindungsgemäßen Gutfeuchte 40, die Frequenz f dem Leitwert LW, T der von dem Temperatursensor 42a, b ermittelten Erntegut- und/oder Umgebungstemperatur 41, P optional berücksichtigen weiteren erntegut- und/oder maschinenspezifischen Parametern 47 und $a_0$ bis an speziellen Koeffizienten entsprechen. Die Koeffizienten $a_0$ bis an ergeben sich aus einem speziellen Kalibrierverfahren, In dem unter Laborbedingungen eine Referenzfeuchte des die landwirtschaftliche Maschine 1 durchlaufenden Erntegutstromes 5 ermittelt und die Referenzfeuchte schließlich graphisch in Beziehung zu dem ermittelten, als Frequenz f wiedergegeben Leitwert LW und der via Temperatursensor 42a, b ermittelten Erntegut- und/oder Umgebungstemperatur 41 gesetzt wird. In einem dreidimensionalen X- Y- Z- Koordinatensystem 46 werden dann die ermittelte Gutfeuohte 40, die Erntegut- und/oder Umgebungstemperatur 41 und die Referenzfeuchte aufgetragen, wobei die in das Koordinatensystem eingetragene Punkteschar eine Ergebnisfläche 46 aufspannt. Aus dieser Ergebnisfläche 46 werden schließlich die Koeffizienten $a_0$, $a_1$, $a_n$ in der Form abgeleitet, dass der Koeffizient $a_0$ der Steigung eines Bereiches der Ergebnisfläche 46 in Richtung der X-Achse, der Koeffizient $a_1$ der Steigung eines Bereiches der Ergebnisfläche 46 in Richtung der Y-Achse und der Koeffizient an dem Schnittpunkt der Ergebnisfläche 46 mit der Z-Achse des räumlichen Koordinatensystems 45 entspricht.

Die so ermittelte Gutfeuchte 40 wird schließlich mittels einer weiteren Signal- und Datenübertragungseinrichtung 27 an die Anzeigeeinheit 39 übermittelt und dort für den Betreiber der landwirtschaftlichen Maschine 1 wahrnehmbar visualisiert. Wie zuvor bereits beschrieben, können die Anzeigeeinheit 39 und die Auswerteinheit 38 auch in einer einzigen Auswert- und Anzeigeeinheit 29 zusammengefasst sein. Zudem steht damit ein sehr präziser, die tatsächlichen Verhältnisse optimal widersplegeinder Wert für die Gutfeuchte 40 zur Verfügung, der unter anderem zur Ermittlung eines hochpräzisen Wertes für den die landwirtschaftliche Maschine 1 durchlaufenden Erntegutdurchsatz herangezogen werden kann. Es liegt Im Rahmen der Erfindung, dass anstelle der den Inhaltsstoff Wassergehalt repräsentierenden Gutfeuchte auch unmittelbar der Inhaltsstoff Trokkenmassegehalt ermittelt und visualisiert werden kann.

Eine weitere qualitative Verbesserung der zu ermittelnden Erntegutfeuchte 40 wird durch Berücksichtigung des zumindest einen weiteren erntegutspezifischen und/oder maschinenspezifischen Parameters P, 47 bei der Ermittlung der Gutfeuchte 40 erreicht. Dabei kann der zumindest eine weitere erntegutspezifische und/oder maschinenspezifische Parameter 47 der Erntegutdurchsatz 48 und/oder die Schichthöhe 49 des von dem erfindungsgemäßen Leitwertsensor 25 detektierten Erntegutstromes 5 und/oder die Erntegutart 50 und/oder die Dichte 51 des Erntegutstromes 5 Im Bereich des Leitwertsensors 25 und/oder der Anpressdruck 52 des Erntegutstromes 5 im Bereich des Leitwertsensors 25 sein, Die vorgeschlagenen Parameter 47 sind deshalb von großer Bedeutung, da Untersuchungen ergeben haben, dass der von dem beschriebenen Leitwertsensor 25 generierte Leitwert LW maßgeblich von dem momentan an dem Leitwertsensor 25 vorbeibewegten Erntegutdurchsatz 48, seiner Schichthöhe 49 und der Gutdichte 51 beeinflusst wird. Dies hängt insbesondere damit zusammen, dass alle drei Parameter 48, 49, 51 maßgeblich die Leitfähigkeit des zu detektierenden Erntegutstromes 5 definieren. Da auch die Zellstruktur der den Erntegutstrom 5 bildenden Pflanzen die Leitfähigkeit des Erntegutes 5 beeinflussen und diese Zellstruktur von Pflanzenart zu Pflanzenart stark schwankt, wird die Leitwertermittlung auch von der zu detektierenden Erntegutart 50 abhängig gemacht. Da der Leitwertsensor 25 den Leitwert LW durch mehr oder weniger intensiven Kontakt seiner Elektroden 31 mit dem zu detektierenden Erntegutstrom 5 generiert, ist es auch von erheblicher Bedeutung wie intensiv der Kontakt zwischen dem Erntegutstrom 5 und den Elektroden 31 des Leitwertsensors 25 ist, wobei die Leitfähigkeit eines Stoffes mit abnehmendem Kontakt zu einem Leitwertsensor 25 sinkt. Deshalb wird auch der Anpressdruck 52, den der Erntegutstromes 5 auf die Elektroden 31 des Leitwertsensors 25 ausübt berücksichtigt, da der Anpressdruck 52 letztlich Synonym für die Intensität des Kontaktes zwischen zu detektierendem Erntegutstrom 5 und dem Leitwertsensor 25 ist

Im einfachsten Fall können für verschiedene Erntegutarten 50 unterschiedliche Kennlinien 53 zur Ermittlung der Gutfeuchte 40 in der Auswerteinheit 38 hinterlegt sein. In diesem Fall gibt der Betreiber der landwirtschaftlichen Maschine 1 mittels einer der Auswert- und/oder Anzeigeeinheit 38, 39 zugeordneten Bedienoberfläche 54 die entsprechende Erntegutart 50 ein und die Auswerteinheit 38 greift automatisch auf die für diese Erntegutart 50 hinterlegten Kennlinien 53 zurück. In analoger Weise können auch für jeden der vorgenannten Parameter 47 eine Vielzahl von Kennlinien 53 hinterlegt sein, sodass jeweils die den konkreten Einsatzfall am besten beschrelbenden Kennlinien 63 zur Ermittlung der Gutfeuchte 40 herangezogen werden können. Es liegt zudem im Rahmen der Erfindung, dass die hinterlegten Kennlinien 53 eine Kombination von mehreren der genannten Parameter 47 berücksichtigen.

Sofern die landwirtschaftliche Arbeitsmaschine 1 als Feldhäcksler 2 ausgeführt ist, kann der beschriebene erntegutspezifische Parameter Anpressdruck 52, gemäß Figur 2, im Bereich des Leitwertsensors 25 aus der Wurfgeschwindigkeit $v_G$ des Erntegutstromes 5 im Bereich des Leitwertsensors 25, der Weite des Durchgangsspaltes 17 (Fig. 1) eines der erfindungsgemäßen Messeinrichtung 23 vorgeordneten Nachbeschleunlgers 13 und/oder dem Auftreffpunkt 55 (Figur 2) des Erntegutstromes 5 Im Bereich des Leitwertsensors 25 bestimmt werden.

In einer noch kompakteren Variante kann die erfindungsgemäße Messeinrichtung 23 so strukturiert sein, dass auch die Auswerteinheit 38 unmittelbar In die den Leitwertsensor 25 umhüllende Abdeckhaube 24 Integriert ist. Dann übergibt die dem Leitwertsensor 25 und aus der Abdeckhaube 24 austretende Signal- und Datenübertragungselnrichtung 27 unmittelbar die ermittelte Erntegutfeuchte 40 oder den korrespondierenden Wert für den Trockensubstanzgehalt an die Anzeigeeinrichtung 39 oder ein der landwirtschaftlichen Maschine 1 zugeordnetes, an sich bekanntes und deshalb nicht näher beschriebenes Bussystem 66, so dass die ermittelten Daten auch weiteren Operationen, etwa der Durchsatzermittlung zur Verfügung stehen.

**Bezugszeichenlister:**

1        landwirtschaftliche Maschine

| | |
|---|---|
| 2 | Feldhäcksler |
| 3 | Vorsatzgerät |
| 4 | Erntegut |
| 5 | Erntegutstrom |
| 6 | Einzugs- und Vorpresswalzen |
| 7 | Vorverdichtungseinrichtung |
| 8 | Häckselorgan |
| 9 | Gegenschneide |
| 10 | Häckselmesser |
| 11 | Nachzerkleinerungseinrichtung |
| 12 | Korncracker |
| 13 | Nachbeschleuniger |
| 14 | Pfeilrichtung |
| 15 | Auswurfschacht |
| 16 | Wandung |
| 17 | Durchgangsspalt |
| 18 | Auswurfkrümmer |
| 19 | Bewegungsbahn |
| 20 | Aufreffbereich |
| 21 | Wandung |
| 22 | Verschleißblech |
| 23 | Messeinrichtung |
| 24 | Abdeckhaube |
| 25 | Leitwertsensor |
| 26 | Signalverarbeitungseinrichtung |
| 27 | Signal- und Datenübertragungseinrichtung |
| 28 | Fahrzeugkabine |
| 29 | Auswert- und Anzeigeeinheit |
| 30 | Grundplatte |
| 31 | Elektrode |
| 32 | dreieckförmige Position |
| 33 | Förderrichtung |
| 34 | Leitungen |
| 35 | Einfassung |
| 36 | Einfassung |
| 37 | Pfeilrichtung |
| 38 | Auswerteinheit |
| 39 | Anzeigeeinheit |
| 40 | Gutfeuchte |
| 41 | Erntegut- und/oder Umgebungstemperatur |
| 42a, b | Temperatursensor |
| 43 | Leitwertmessbrücke |
| 44 | Prüfroutine |
| 45 | Koordinatensystem |
| 46 | Ergebnisfläche |
| 47 | Parameter |
| 48 | Erntegutdurchsatz |
| 49 | Schichthöhe |
| 50 | Erntegutart |
| 51 | Gutdichte |
| 52 | Anpressdruck |
| 53 | Kennlinie |
| 54 | Bedienoberfläche |
| 55 | Auftreffpunkt |
| 56 | Bussystem |
| $P_i$ | Parameter 47 |
| LW | Leitwert |
| R | Widerstand |
| $V_G$ | Wurfgeschwindigkeit |
| f | Frequenz |

**Patentansprüche**

1. Messeinrichtung (23) zur Messung von Inhaltsstoffen eines Erntegutes, wobei die Messeinrichtung an einer landwirtschaftlichen Maschine (1) angebracht ist und zumindest einen Leitwertsensor (25) umfasst, wobei
der zumindest eine Leitwertsensor (25) den Inhaltsstoff Gutfeuchte (40) ermittelt und wobei die Gutfeuchte (40) durch temperaturkompensierte Detektion des Leitwertes (LW) ermittelt wird, **dadurch gekennzeichnet,**
**dass** die landwirtschaftliche Maschine (1) als Feldhäcksler (2) ausgeführt ist und der Leitwertsensor (25) an einem den Erntegutstrom abfördernden Auswurfkrümmer (18) innenseitig und im Bereich des Auftreffens des von dem Nachbeschleuniger (13) beschleunigten Erntegutstromes (5) positioniert ist, wobei der zumindest eine Leitwertsensor (25) drei Elektroden (31) umfasst und wobei die Elektroden (31) in einer Dreieckanordnung (32) zueinander positioniert sind.

2. Messeinrichtung zur Messung von Inhaltsstoffen eines Erntegutes nach Anspruch 1,
**dadurch gekennzeichnet,**
**dass** zur Temperaturkompensation ein Temperatursensor (42b) vorgesehen ist und wobei der Temperatursensor (42b) in den Leitwertsensors (25) integriert ist.

3. Messeinrichtung zur Messung von Inhaltsstoffen eines Erntegutes nach einem der Ansprüche 1 oder 2,
**dadurch gekennzeichnet,**
**dass** bei der Ermittlung des Inhaltsstoffes Gutfeuchte (40) zumindest ein weiterer erntegutspezifischer und/oder maschinenspezifischer Parameter (47) berücksichtigt wird.

4. Messeinrichtung zur Messung von Inhaltsstoffen eines Erntegutes nach Anspruch 3,
**dadurch gekennzeichnet,**
**dass** der zumindest eine weitere erntegutspezifische und/oder maschinenspezifische Parameter (47) der Erntegutdurchsatz (48) und/oder die Schichthöhe (49) des von dem Leitwertsensor (25) detektierten Erntegutstromes (5) und/oder die Erntegutart (50) und/oder die Dichte (51) des Erntegutes (5) im Bereich des Leitwertsensors (25) und/oder der Anpressdruck (52) des Erntegutes (5) im Bereich des Leitwertsensors (25) ist.

5. Messeinrichtung zur Messung von Inhaltsstoffen eines Erntegutes nach Anspruch 4,

**dadurch gekennzeichnet,**
**dass** die landwirtschaftliche Maschine (1) als Feldhäcksler (2) ausgeführt ist und der erntegutspezifische Parameter (47) Anpressdruck (52) des Erntegutes (5) im Bereich des Leitwertsensors (25) aus der Wurfgeschwindigkeit (v$_G$) des Erntegutes (5) im Bereich des Leitwertsensors (25), der Weite des Durchgangsspaltes (17) eines dem Leitwertsensor (25) vorgeordneten Nachbeschleunigers (13) und/oder dem Auftreffpunkt (55) des Erntegutstromes (5) im Bereich des Leitwertsensors (25) bestimmt wird.

6.  Messeinrichtung zur Messung von Inhaltsstoffen eines Erntegutes nach einem der vorgeordneten Ansprüche,
    **dadurch gekennzeichnet,**
    **dass** die Dreieckanordnung (32) der Elektroden (31) des Leitwertsensors (25) in oder entgegen der Gutflussrichtung (33) weisend ausgerichtet ist.

7.  Messeinrichtung zur Messung von Inhaltsstoffen eines Erntegutes nach einem der vorgeordneten Ansprüche,
    **dadurch gekennzeichnet,**
    **dass** der Temperatursensor (42b) zumindest einer der Elektroden (31) des Leitwertsensors (25) zugeordnet ist.

8.  Messeinrichtung zur Messung von Inhaltsstoffen eines Erntegutes nach einem der vorgeordneten Ansprüche,
    **dadurch gekennzeichnet,**
    **dass** die Elektroden (31) des Leitwertsensors (25) so miteinander gekoppelt sind, dass stets zwischen zwei Elektroden (31) eine Leitwertmessbrücke (43) gebildet werden kann und mittels einer Auswerteinheit (29, 38) ein Vergleich der detektierten Leitwerte (LW) und die Auswahl eines Leitwertes (LW) möglich ist.

9.  Messeinrichtung zur Messung von Inhaltsstoffen eines Erntegutes nach einem der Ansprüche 1-7,
    **dadurch gekennzeichnet,**
    **dass** zumindest zwei Elektroden (31) des Leitwertsensors (25) kurzgeschlossen sind, so dass sich zwischen den Elektroden (31) nur eine Leitwertmessbrücke (43) ergibt und wobei der ermittelte Leitwert LW an eine Auswerteinheit (29, 38) übergeben wird.

10. Messeinrichtung zur Messung von Inhaltsstoffen eines Erntegutes nach einem der vorgeordneten Ansprüche,
    **dadurch gekennzeichnet,**
    **dass** die Elektroden (31) des Leitwertsensors (25) in ihrer vertikalen Positionierung (37) in dem Leitwertsensor (25) einstellbar sind.

11. Messeinrichtung zur Messung von Inhaltsstoffen eines Erntegutes nach einem der vorgeordneten Ansprüche,
    **dadurch gekennzeichnet,**
    **dass** die Elektroden (31) des Leitwertsensors (25) in eine Grundplatte (30) integriert sind und die Grundplatte (30) in zwei um 180° versetzte Positionen in die landwirtschaftliche Maschine (1, 2) integrierbar ist.

12. Messeinrichtung zur Messung von Inhaltsstoffen eines Erntegutes nach einem der vorgeordneten Ansprüche,
    **dadurch gekennzeichnet,**
    **dass** die Elektroden (31) des Leitwertsensors (25) von Einfassungen (35, 36) aus verschfeißhartem Material ummantelt sind.

13. Messeinrichtung zur Messung von Inhaltsstoffen eines Erntegutes nach Anspruch 12,
    **dadurch gekennzeichnet,**
    **dass** die Einfassungen (36) in Gutflussrichtung stromlinienförmig ausgebildet sind.

14. Messeinrichtung zur Messung von Inhaltsstoffen eines Erntegutes nach einem der vorhergehenden Ansprüche,
    **dadurch gekennzeichnet,**
    **dass** der Leitwertsensor (25) ein als Abdeckhaube (24) ausgeführtes Gehäuse umfasst und wobei die Signalverarbeitungseinrichtung (26) des Leitwertsensor (26) sowie die der landwirtschaftlichen Maschine (1) zugeordnete Auswerteinheit (38) in das als Abdeckhaube (24) ausgeführte Gehäuse integriert sind.

15. Messeinrichtung zur Messung von Inhaltsstoffen eines Erntegutes nach einem der vorhergehenden Ansprüche,
    **dadurch gekennzeichnet,**
    **dass** der ermittelte Inhaltsstoff die Gutfeuchte (40) oder ihr Äquivalent, der Trockenmassegehalt, ist und wobei die ermittelte Gutfeuchte (40) und/oder der Trockenmassegehalt in einer Anzeigeeinheit (29, 39) visualisiert und zudem wiederabrufbar in der Auswerteinheit (29, 38) hinterlegt werden.

## Claims

1.  A measuring device (23) for measuring components of a crop material, wherein the measuring device is mounted to an agricultural machine (1) and includes at least one conductance sensor (25), wherein the at least one conductance sensor (25) ascertains the component material moisture content (40) and wherein the material moisture content (40) is ascertained by temperature-compensated detection of the conductance (LW), **characterised in that** the agricultural machine (1) is in the form of a forage harvester (2) and the conductance sensor (25) is positioned at the inside on a curved discharge member (18) for conveying the crop material flow (5) away and in the region of incidence of the crop material flow (5) which is accelerated by the post-accelerating device (13), wherein the at least one conductance sensor (25) includes three electrodes (31) and wherein the electrodes (31) are positioned in a triangular arrangement (32) relative to each other.

2. A measuring device for measuring components of a crop material according to claim 1 **characterised in that** a temperature sensor (42b) is provided for temperature compensation and wherein the temperature sensor (42b) is integrated in the conductance sensor (25).

3. A measuring device for measuring components of a crop material according to one of claims 1 and 2 **characterised in that** when ascertaining the component material moisture content (40) at least one further crop material-specific and/or machine-specific parameter (47) is taken into consideration.

4. A measuring device for measuring components of a crop material according to claim 3 **characterised in that** the at least one further crop material-specific and/or machine-specific parameter (47) is the crop material throughput (48) and/or the layer thickness (49) of the crop material flow (5) detected by the conductance sensor (25) and/or the kind of crop material (50) and/or the density (51) of the crop material (5) in the region of the conductance sensor (25) and/or the pressing pressure (52) of the crop material (5) in the region of the conductance sensor (25).

5. A measuring device for measuring components of a crop material according to claim 4 **characterised in that** the agricultural machine (1) is in the form of a forage harvester (2) and the crop material-specific parameter (47) pressing pressure (52) of the crop material (5) in the region of the conductance sensor (25) is determined from the throw speed ($v_G$) of the crop material (5) in the region of the conductance sensor (25), the width of the passage gap (17) of a post-accelerating device (13) arranged upstream of the conductance sensor (25) and/or the incidence point (55) of the crop material flow (5) in the region of the conductance sensor (25).

6. A measuring device for measuring components of a crop material according to one of the preceding claims **characterised in that** the triangular arrangement (32) of the electrodes (31) of the conductance sensor (25) is oriented to face in or in opposite relationship to the material flow direction (33).

7. A measuring device for measuring components of a crop material according to one of the preceding claims **characterised in that** the temperature sensor (42b) is associated with at least one of the electrodes (31) of the conductance sensor (25).

8. A measuring device for measuring components of a crop material according to one of the preceding claims **characterised in that** the electrodes (31) of the conductance sensor (25) are so coupled together that a conductance measuring bridge (43) can always be formed between two electrodes (31) and a comparison between the detected conductance values (LW) and the selection of a conductance value (LW) is possible by means of an evaluation unit (29, 38).

9. A measuring device for measuring components of a crop material according to one of claims 1 to 7 **characterised in that** at least two electrodes (31) of the conductance sensor (25) are short-circuited so that there is only one conductance measuring bridge (43) between the electrodes (31) and wherein the ascertained conductance (LW) is transmitted to an evaluation unit (29, 38).

10. A measuring device for measuring components of a crop material according to one of the preceding claims **characterised in that** the electrodes (31) of the conductance sensor (25) are adjustable in their vertical positioning (37) in the conductance sensor (25).

11. A measuring device for measuring components of a crop material according to one of the preceding claims **characterised in that** the electrodes (31) of the conductance sensor (25) are integrated in a base plate (30) and the base plate (30) can be integrated into the agricultural machine (1, 2) in two positions displaced through 180°.

12. A measuring device for measuring components of a crop material according to one of the preceding claims **characterised in that** the electrodes (31) of the conductance sensor (25) are sheathed by enclosures (35, 36) of wear-resistant material.

13. A measuring device for measuring components of a crop material according to claim 12 **characterised in that** the enclosures (36) are of a streamlined configuration in the material flow direction.

14. A measuring device for measuring components of a crop material according to one of the preceding claims **characterised in that** the conductance sensor (25) includes a housing which is in the form of a cover hood (24) and wherein the signal processing device (26) of the conductance sensor (25) and the evaluation unit (38) associated with the agricultural machine (1) are integrated in the housing which is in the form of the cover hood (24).

15. A measuring device for measuring components of a crop material according to one of the preceding claims **characterised in that** the ascertained component is the material moisture content (40) or its equivalent, the dry mass content, and wherein the ascertained material moisture content (40) and/or the dry mass content are displayed in a display unit (29, 39) and are also stored in the evaluation unit (29, 38) in such a way that they can be called up again.

**Revendications**

1. Dispositif de mesure (23) pour mesurer des constituants d'un produit de récolte, lequel dispositif de mesure est monté sur une machine agricole (1) et comprend au moins un capteur de conductance (25), ledit au moins un capteur de conductance (25) déterminant le constituant « humidité du produit (40) », et l'humidité du produit (40) étant déterminée par détection compensée en température de la conductance (LW), **caractérisé en ce que** la machine agricole (1) est réalisée sous la forme d'une ensileuse (2) et le capteur de conductance (25) est positionné sur une goulotte d'éjection (18), qui évacue le flux de produit de récolte, du côté intérieur et dans la zone d'impact du flux de produit de récolte (5) accéléré par le post-accélérateur (13), ledit au moins un capteur de conductance (25) comprenant trois électrodes (31), et les électrodes (31) étant positionnées dans une disposition triangulaire (32) les unes par rapport aux autres.

2. Dispositif de mesure pour mesurer des constituants d'un produit de récolte selon la revendication 1, **caractérisé en ce qu'**un capteur de température (42b) est prévu pour la compensation de température, lequel capteur de température (42b) est intégré dans le capteur de conductance (25).

3. Dispositif de mesure pour mesurer des constituants d'un produit de récolte selon l'une des revendications 1 ou 2, **caractérisé en ce que**, lors de la détermination du constituant « humidité du produit (40) », au moins un autre paramètre (47) spécifique au produit de récolte et/ou spécifique à la machine est pris en compte.

4. Dispositif de mesure pour mesurer des constituants d'un produit de récolte selon la revendication 3, **caractérisé en ce que** ledit au moins un autre paramètre (47) spécifique au produit de récolte et/ou spécifique à la machine est le débit de produit de récolte (48) et/ou la hauteur de couche (49) du flux de produit de récolte (5) détecté par le capteur de conductance (25) et/ou la nature du produit de récolte (50) et/ou la densité (51) du produit de récolte (5) dans la zone du capteur de conductance (25) et/ou la pression d'application (52) du produit de récolte (5) dans la zone du capteur de conductance (25).

5. Dispositif de mesure pour mesurer des constituants d'un produit de récolte selon la revendication 4, **caractérisé en ce que** la machine agricole (1) est réalisée sous la forme d'une ensileuse (2), et le paramètre (47) spécifique au produit de récolte « pression d'application (52) du produit de récolte (5) dans la zone du capteur de conductance (25) » est déterminé à partir de la vitesse d'éjection ($V_G$) du produit de récolte (5) dans la zone du capteur de conductance (25), de la largeur de la fente de passage (17) d'un post-accélérateur (13) placé avant le capteur de conductance (25) et/ou du point d'impact (55) du flux de produit de récolte (5) dans la zone du capteur de conductance (25).

6. Dispositif de mesure pour mesurer des constituants d'un produit de récolte selon l'une des revendications précédentes, **caractérisé en ce que** la disposition triangulaire (32) des électrodes (31) du capteur de conductance (25) est orientée dans le même sens ou dans le sens opposé à celui du flux de produit (33).

7. Dispositif de mesure pour mesurer des constituants d'un produit de récolte selon l'une des revendications précédentes, **caractérisé en ce que** le capteur de température (42b) est associé à au moins une des électrodes (31) du capteur de conductance (25).

8. Dispositif de mesure pour mesurer des constituants d'un produit de récolte selon l'une des revendications précédentes, **caractérisé en ce que** les électrodes (31) du capteur de conductance (25) sont couplées ensemble de façon qu'un pont de mesure de conductance (43) puisse toujours être formé entre deux électrodes (31) et qu'une comparaison des conductances (LW) détectées et la sélection d'une conductance (LW) soient possibles au moyen d'une unité d'analyse (29, 38).

9. Dispositif de mesure pour mesurer des constituants d'un produit de récolte selon l'une des revendications 1 à 7, **caractérisé en ce qu'**au moins deux électrodes (31) du capteur de conductance (25) sont court-circuitées, de sorte qu'il en résulte un seul pont de mesure de conductance (43) entre les électrodes (31), la conductance (LW) déterminée étant transmise à une unité d'analyse (29, 38).

10. Dispositif de mesure pour mesurer des constituants d'un produit de récolte selon l'une des revendications précédentes, **caractérisé en ce que** les électrodes (31) du capteur de conductance (25) sont réglables sur le plan de leur positionnement vertical (37) dans le capteur de conductance (25).

11. Dispositif de mesure pour mesurer des constituants d'un produit de récolte selon l'une des revendications précédentes, **caractérisé en ce que** les électrodes (31) du capteur de conductance (25) sont intégrées dans une plaque de base (30), et la plaque de base (30) est intégrable dans deux positions décalées de 180° dans la machine agricole (1, 2).

12. Dispositif de mesure pour mesurer des constituants d'un produit de récolte selon l'une des revendications précédentes, **caractérisé en ce que** les électrodes (31) du capteur de conductance (25) sont enveloppées par des moyens d'entourage (35, 36) en matériau résistant à l'usure.

13. Dispositif de mesure pour mesurer des constituants d'un produit de récolte selon la revendication 12, **caractérisé en ce que** les moyens d'entourage (36) sont carénés dans la direction du flux de produit.

14. Dispositif de mesure pour mesurer des constituants d'un produit de récolte selon l'une des revendications précédentes, **caractérisé en ce que** le capteur de conductance (25) comprend un boîtier réalisé sous la forme d'un capot (24), le dispositif de traitement de signaux (26) du capteur de conductance (25) ainsi que l'unité d'analyse (38) associée à la machine agricole (1) étant intégrés dans le boîtier réalisé sous la forme d'un capot (24).

15. Dispositif de mesure pour mesurer des constituants d'un produit de récolte selon l'une des revendications précédentes, **caractérisé en ce que** le constituant déterminé est l'humidité du produit (40) ou son équivalent, la teneur en masse sèche, l'humidité du produit (40) et/ou la teneur en masse sèche déterminées étant visualisées sur une unité d'affichage (29, 39) et stockées en plus dans l'unité d'analyse (29, 38) de façon à pouvoir être rappelées.

Fig. 1

EP 2 057 883 B2

Ansicht A

Fig.2

EP 2 057 883 B2

Referenz-feuchte

T,40

45 46 T,41

53

47

F = a₀* f + a₁* T + a₂* P₁ + ... + aₙ

$$F = a_0 * f + a_1 * T + a_2 * P_1 + \ldots + a_n$$

f , LW(Hz)

44 LW?

23 34 34 43c,R 31

21

26 31

34 31 43a,R 43b,R 25

24

42a,b

Erntegutdurchsatz 48

Schichtdicke 49

Erntegutart 50

Gutdichte 51

Anpressdruck 52

40

39

F=60%

54

27 38 27 29

56

Fig.3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0843959 A
- EP 0931446 A
- EP 0908086 A
- US 5092819 A